# EUROPÄISCHE PATENTSCHRIFT

(11) **EP 2 594 225 B1**
(45) Veröffentlichungstag und Bekanntmachung des Hinweises auf die Patenterteilung: **04.07.2018**
(21) Anmeldenummer: 12191470.9
(22) Anmeldetag: 06.11.2012
(51) Int. Cl.: A61C 8/00

(54) **Verankerungsvorrichtung zum Befestigen von orthodontischen Drähten oder kieferorthopädischen Apparaturen für kieferorthopädische Korrekturbehandlungen**
Anchoring device for fixing orthodontic wires or corrective orthodontic apparatuses for orthodontic correcting treatments
Dispositif d'ancrage destiné à la fixation de fils orthodontiques ou d'appareils d'orthopédie maxillo-faciale pour les traitements de correction orthopédique de la mâchoire

(30) Priorität: 21.11.2011 DE 102011086711
(43) Veröffentlichungstag der Anmeldung: 22.05.2013
(73) Patentinhaber: Promedia A. Ahnfeldt GmbH, 57080 Siegen (DE)
(72) Erfinder: Ahnfeldt, Hartwig, 57080 Siegen (DE)
(74) Vertreter: advotec.

(56) Entgegenhaltungen:
- EP-A2- 1 147 745
- WO-A1-02/091941
- WO-A1-2005/120383
- WO-A2-92/02191

## Beschreibung

Die Erfindung betrifft eine Verankerungsvorrichtung zum Befestigen von orthodontischen Drähten oder kieferorthopädischen Apparaturen für kieferorthopädische Korrekturbehandlungen, bestehend aus einer in den jeweiligen Kiefer einschraubbaren Ankerschraube, an der der jeweilige Draht bzw. die jeweilige kieferorthopädische Apparatur vorzugsweise im Bereich des Kopfteils der Ankerschraube angreifen kann und lösbar befestigt werden kann, wobei die Verankerungsvorrichtung ein Kopplungselement aufweist, das an einem Ende des Drahtes bzw. der jeweiligen kieferorthopädischen Apparatur vorgesehen ist.

Aus dem Prospekt "Dual-Top Anchor Screw" der Jeil Medical Corporation, Seoul, Korea vom Mai 2004 ist bereits eine Ankerschraube bekannt, die in dem Schaft zwischen Kragen und Schraubenkopf eine den Schaft radial durchdringende Bohrung aufweist, durch die der jeweilige Draht hindurchgesteckt wird, wobei der Draht dann an dem Schaft befestigt wird. Da sich die ganze Angelegenheit im Mund des Patienten abspielt und die Platzverhältnisse dort sehr gering sind, gestaltet sich die Befestigung des Drahtes oft sehr schwierig und auch langwierig.

Um das Befestigen der jeweiligen Drähte an der Ankerschraube wesentlich zu vereinfachen, wurde eine Verankerungsvorrichtung entwickelt, die in der DE 20 2004 018 329 U1 beschrieben ist. Dabei ist im Schraubenkopf ein am äußeren Umfang desselben austretender Kreuzschlitz vorgesehen, in den ein mit dem jeweiligen Draht verbindbarer, dem Kreuzschlitz angepasster Adapter im Wesentlichen formschlüssig eingesetzt und gehalten ist. Dabei kann der Adapter beispielsweise drei kurze Arme mit an deren freien Enden einstückig angeformten Hakenteilen aufweisen, die mit Nasen unter dem Schraubenkopf der Ankerschraube einrasten, und einen langen Arm aufweisen, an dem der jeweilige Draht befestigt ist.

Beide zuvor beschriebenen Verankerungsvorrichtungen haben jedoch den Nachteil, dass eine Anpassung des Drahtes in seiner radialen Stellung zur Ankerschraube und in seiner Neigung zur Längsmittelachse der Ankerschraube kaum bzw. nicht möglich ist, so dass je nach Anwendung eine Vorspannung des Drahtes in dem sehr begrenzten Raum im Mund des Patienten sehr schwierig erreicht werden kann.

Eine weitere gattungsgemäße Verankerungsvorrichtung ist in der DE 10 2005 061 463 B3 beschrieben, bei der das Befestigen der jeweiligen Drähte an der Ankerschraube weiter vereinfacht ist. Dazu ist an den Schaft der Ankerschraube ein mit dem jeweiligen Draht verbindbarer Adapter clipartig angebracht, der an dem Schaft form- und kraftschlüssig angreift und gehalten ist. Diese Verankerungsvorrichtung ermöglicht zwar eine Anpassung des Drahtes in seiner radialen Stellung zur Ankerschraube, jedoch ist eine Anpassung des Drahtes in seiner Neigung zur Längsmittelachse der Ankerschraube nicht möglich. Zudem ist es nötig, den Adapter zur Gewinnung einer rotationsfesten und winkelstabilen Verbindung vorzugsweise mit einem aushärtenden Klebstoff oder Kunststoff an dem Schaft zu fixieren.

Die WO 02/091941 A1 beschreibt ein kieferorthopädisches Implantat mit einem Befestigungsmittel, das an einem Knochen des Oberkiefers oder des Unterkiefers einer Person befestigt wird und ein Montageelement zur Montage von kieferorthopädischen Vorrichtungen umfasst. Dabei ist das Montageelement mit dem Befestigungsmittel mittels eines Verbindungsteils verbunden, das sich durch das den betreffenden Knochen umgebende Zahnfleisch erstreckt, wobei das Befestigungsmittel aus einer Platte gebildet ist, durch die zur Befestigung Schrauben bis in den Knochen des Ober- oder Unterkiefers ragen.

In der EP 1 147 745 A2 ist eine Vorrichtung für die Gaumenerweiterung mit einem in seiner Längenabmessung verlängerbaren und/oder verkürzbaren Extensionsteil beschrieben, das an seinen beiden Enden jeweils ein Fixierteil aufweist. Jedes Fixierteil ist als punktförmiges Knochenabstützungsteil aufgebaut, wobei das Knochenabstützungsteil mit dem Extensionsteil über ein einstellbares und in seiner Position fixierbares Gelenk verbunden ist.

Eine intraorale orthodontische Verankerung mit einer am Kieferknochen mit mehreren Knochenschrauben anschraubbaren Verankerungsplatte ist in der WO 2005/120383 A1 beschrieben. Dabei ist die Verankerungsplatte mit einem Befestigungskopf versehen, an dem mindestens ein zur Erzeugung und/oder Übertragung von Kräften geeignetes weiteres Teil sowohl verschiebungs- als auch schwenk- oder drehfest befestigt werden kann. Der Befestigungskopf ist ein separates Teil und an der Verankerungsplatte erst nach deren Anbringung am Kieferknochen in unterschiedlicher räumlicher Orientierung anbringbar. Miteinander in Berührung kommende Flächen am Befestigungskopf und an der Verankerungsplatte können nach Art von Gelenkflächen, insbesondere nach Art von Kugelgelenkflächen, ausgebildet sein.

Der Erfindung liegt die Aufgabe zugrunde, eine Verankerungsvorrichtung der angegebenen Gattung zu schaffen, die eine Anpassung des Drahtes bzw. einer kieferorthopädischen Apparatur in seiner bzw. ihrer radialen Stellung zur Ankerschraube und in seiner bzw. ihrer Neigung zur Längsmittelachse der Ankerschraube ermöglicht, wobei ggf. sehr einfach und schnell eine Vorspannung des Drahtes erzielt werden kann, und bei der der Draht bzw. die Apparatur ohne Zuhilfenahme von Klebstoff oder Kunststoff sicher, einfach und schnell fixiert werden kann.

Diese Aufgabe wird erfindungsgemäß durch die Kennzeichnungsmerkmale des Patentanspruchs 1 gelöst.

Zweckmäßige Weiterbildungen der Erfindung sind in den Unteransprüchen gekennzeichnet.

Die erfindungsgemäße Verankerungsvorrichtung weist ein Kopplungselement auf, das an einem Ende des jeweiligen Drahtes bzw. der jeweiligen Apparatur vorgesehen und in eine stirnseitige Ausnehmung im Kopfteil der Ankerschraube einsetzbar ist, in der das Kopplungselement in alle Richtungen schwenkbar, frei drehbar und festklemmbar ist. Diese Ausbildung gewährleistet eine relativ einfache und schnelle Montierbarkeit derselben. Nach dem Eindrehen der Ankerschraube in den Kiefer muss das Kopplungselement lediglich in die Ausnehmung im Kopfteil der Ankerschraube eingesteckt werden. Durch diese relativ einfache Befestigungsart entsteht eine enorme Zeitersparnis, wodurch selbstverständlich auch die Kosten sehr stark reduziert werden. Die Schwenkbarkeit und freie Drehbarkeit des Kopplungselementes in der Ausnehmung schafft eine einfache Möglichkeit, eine Vorspannung auf den jeweiligen Draht und somit auf den jeweils zu bewegenden Zahn, Kieferteil oder sonstiges einzustellen, wobei die Vorspannung wiederum sehr einfach fixierbar und auch verstellbar ist.

Dazu weist die stirnseitige Ausnehmung erfindungsgemäß im Kopfteil der Ankerschraube im Grund derselben einen kugelförmigen Teil auf, der oberhalb der Mitte der Kugel in einen sich von der Stirnseite des Kopfteils erstreckenden kegelförmigen Teil der Ausnehmung ausläuft. Das im Wesentlichen zylindrische Kopplungselement weist an seinem freien Ende ebenfalls einen entsprechenden kugelförmigen Teil auf. Die Ausbildung der Ausnehmung sorgt dafür, dass der kugelförmige Teil des Kopplungselements in dem kugelförmigen Teil der Ausnehmung einclipsbar und sicher in axialer Richtung gehalten ist.

Für eine sichere Fixierung des Kopplungselementes weist der kugelförmige Teil des Kopplungselementes erfindungsgemäß mindestens einen denselben radial durchdringenden Schlitz auf, der bzw. die den kugelförmigen Teil des Kopplungselementes in Segmente teilt. Zudem weist das Kopplungselement erfindungsgemäß eine sich im wesentlichen über die gesamte Länge desselben erstreckte koaxiale Gewindebohrung auf, die an ihrem zu dem kugelförmigen Teil des Kopplungselementes gerichteten Ende in einen kegelförmigen Teil ausläuft. In die Gewindebohrung ist ein Gewindestift einschraubbar, der mit seinem kegelförmig ausgebildeten Ende beim Verdrehen des Gewindestiftes in die eine Richtung in dem kegelförmigen Teil der Gewindebohrung zur Anlage kommt und die Segmente des kugelförmigen Teils des Kopplungselementes in dem kugelförmigen Teil der stirnseitigen Ausnehmung im Kopfteil einspannt.

Zum einfachen Entnehmen des Kopplungselementes aus der Ausnehmung kann das zu dem kugelförmigen Teil des Kopplungselementes bzw. zu dem kugelförmigen Teil der Ausnehmung gerichtete Ende des Gewindestiftes ebenfalls kugelförmig ausgebildet sein, das sich beim Verdrehen des Gewindestiftes in die andere Richtung am Grund des kugelförmigen Teils der stirnseitigen Ausnehmung im Kopfteil abstützt, wobei das Kopplungselement mit seinem kugelförmigen Teil aus der Ausnehmung herausbewegt wird. Die reversible Schraubverbindung erlaubt eine einfache Entfernung des Kopplungselementes von der Ankerschraube, ohne das Belastungen auf die Ankerschraube auftreten.

In dem freien von dem kugelförmigen Teil des Kopplungselementes bzw. von dem kugelförmigen Teil der Ausnehmung abgewandten Ende des Gewindestiftes ist ein Innenmehrkant für ein entsprechend ausgebildetes Werkzeug vorgesehen.

Das Kopplungselement kann entweder einstückig an den jeweiligen Draht bzw. an die jeweilige kieferorthopädische Apparatur angeformt oder mittels eines Fügeverfahrens, beispielsweise mittels eines Laserstrahls, mit dem jeweiligen Draht bzw. der jeweiligen kieferorthopädischen Apparatur verbunden sein, wobei bei letzterem vorzugsweise an das von dem kugelförmigen Teil des Kopplungselementes abgewandten Ende ein koaxialer Bund an das Kopplungselement einstückig angeformt ist, in dem eine umlaufende Nut zur Aufnahme des jeweiligen Drahtes eingeformt sein kann.

Das Gewinde des Gewindeschaftes der Ankerschraube erstreckt sich von der Spitze über einen ersten Teilbereich desselben, wobei der an das Gewinde anschließende zweite Teilbereich des Gewindeschaftes sich vorzugsweise gewindelos kegel- oder trompetenförmig zu einem Kragen des Kopfteils hin erstreckt und das Gewinde rückschneidend ausgebildet sein kann. Dabei ist der Übergang zwischen dem kegel- oder trompetenförmigen zweiten Teilbereich des Gewindeschaftes zu dem Kragen hin vorzugsweise abgerundet.

Durch die besondere Ausbildung der Ankerschraube kann dieselbe im retromolaren und palatinalen Bereich verwendet werden, wobei das Gewinde der Ankerschraube nach dem Eindrehen derselben in den jeweiligen Kiefer komplett im Kieferknochen verschwindet und die Schleimhaut an dem gewindelosen bzw. glatten Teilbereich des Gewindeschaftes anliegt. Reizungen der Schleimhaut bei Bewegungen, wie Sprechen, Kauen usw. werden dadurch weitestgehend vermieden. Da die Ankerschraube zumeist relativ lange im Kiefer verbleibt und im Kiefer bzw. der Schleimhaut einwächst, wird durch die rückschneidende Ausbildung des Gewindes das Ausdrehen der Ankerschraube aus dem Kiefer und durch die Schleimhaut erleichtert.

Die Spitze der Ankerschraube ist vorzugweise als Bohrspitze mit einer Bohrkerbe ausgebildet und das Kopfteil der Ankerschraube weist zum Ein- und Ausdrehen derselben an seinem äußeren Umfang einen Mehrkant auf.

Nachfolgend wird anhand der Zeichnung eine bevorzugte Ausführungsform einer Verankerungsvorrichtung näher erläutert.

Es zeigen
- **Fig. 1**: eine Längsschnittdarstellung einer Verankerungsvorrichtung,
- **Fig. 2**: eine Vorderansicht einer ersten Ausführungsform einer Ankerschraube,
- **Fig. 3**: einen Schnitt nach der Linie III-III in **Fig. 2****,**
- **Fig. 4**: eine Draufsicht der Ankerschraube nach **Fig. 2****,**
- **Fig. 5**: eine Vorderansicht eines Ausführungsbeispiels eines Kopplungselementes, an das ein Draht mittels eines Fügeverfahrens angebracht ist,
- **Fig. 6**: einen Schnitt nach der Linie VI-VI in **Fig. 5****,**
- **Fig. 7**: eine Draufsicht des Kopplungselementes nach **Fig. 5****,**
- **Fig. 8**: eine Vorderansicht eines Gewindestiftes,
- **Fig. 9**: einen Schnitt nach der Linie IX-IX in **Fig. 8****,**
- **Fig. 10**: eine Draufsicht des Gewindestiftes nach **Fig. 8****,**
- **Fig. 11a** bis **Fig. 11c**: Vorderansichten der Verankerungsvorrichtung mit dem Kopplungselement in verschiedenen Stellungen,
- **Fig. 12**: eine Seitenansicht eines Ausführungsbeispiels eines einstückig mit dem Draht verbundenen Kopplungselementes,
- **Fig. 13**: eine Ansicht in Richtung des Pfeiles XIII in **Fig. 12** und
- **Fig. 14**: eine Vorderansicht einer zweiten Ausführungsform einer Ankerschraube.

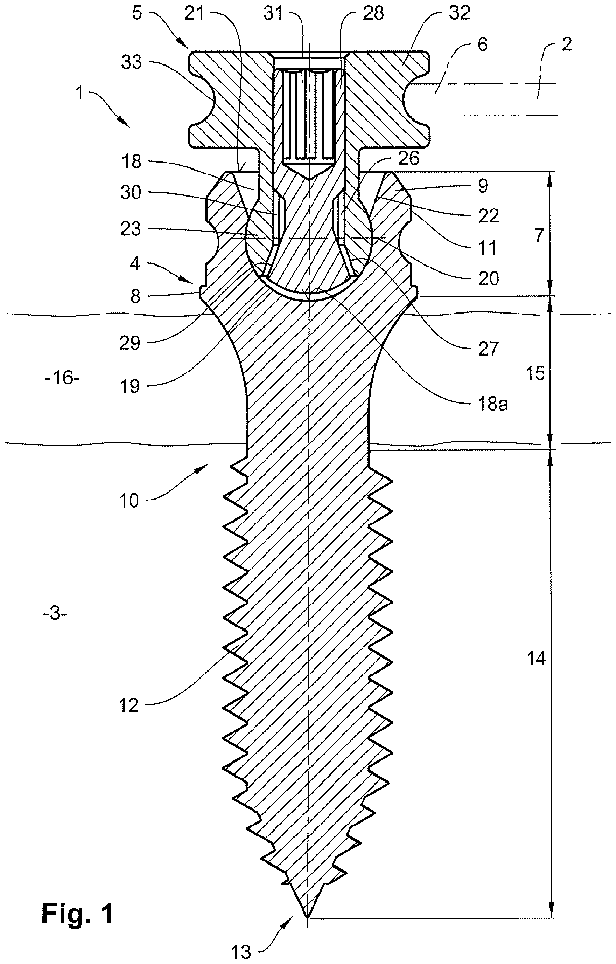

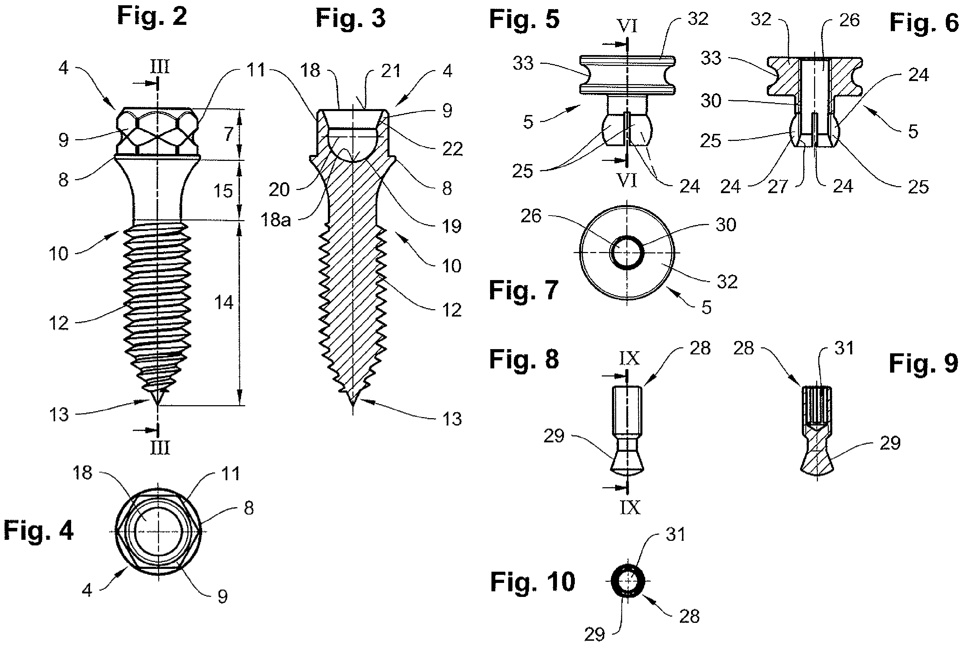

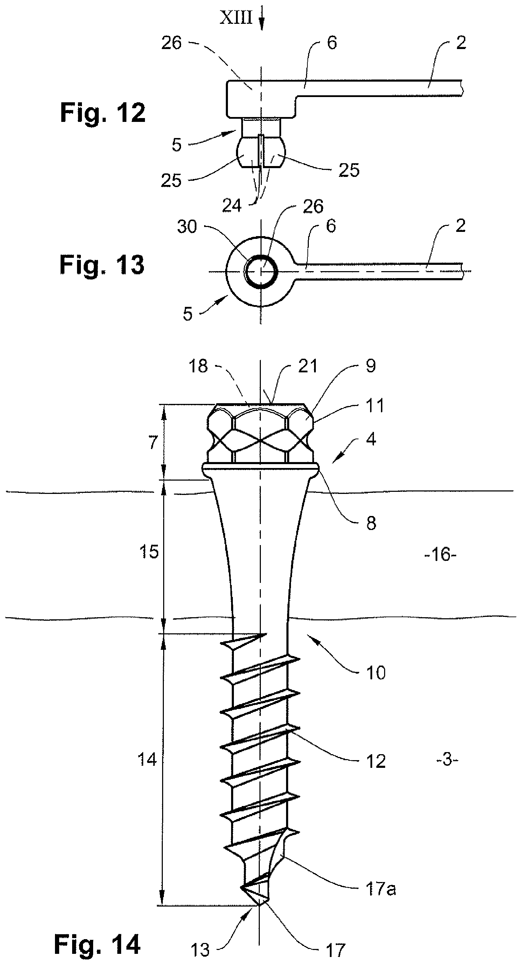

Die in den **Figuren** dargestellte Verankerungsvorrichtung 1 zum Befestigen von orthodontischen Drähten 2 oder kieferorthopädischen Apparaturen (in den **Figuren** nicht dargestellt) für kieferorthopädische Korrekturbehandlungen besteht im Wesentlichen aus einer in den jeweiligen Kiefer 3 einschraubbaren Ankerschraube 4 (siehe **Fig. 2** bis **4** und **14**) und einem Kopplungselement 5 (siehe **Fig. 1** und **5** bis **7**)**.** Der jeweilige Draht 2 bzw. die jeweilige kieferorthopädische Apparatur ist mit seinem einen Ende 6 entweder einstückig an das Kopplungselement 5 angeformt (siehe **Fig. 12** und **13**) oder mittels eines in der Kieferorthopädie üblichen Fügeverfahrens mit dem Kopplungselement 5 verbunden (Draht 2 in **Fig. 1** strichpunktiert dargestellt).

Die in **Fig. 1** bis **4** und **14** dargestellten Ankerschrauben 4 bestehen jeweils im Wesentlichen aus einem Kopfteil 7, der durch einen Kragen 8 sowie einen daran anschließenden Schraubenkopf 9 gebildet ist und einem Gewindeschaft 10. Der Schraubenkopf 9 ist an seinem äußeren Umfang 11 mit einem Mehrkant zum Eindrehen der Ankerschraube 4 in den Kiefer 3 versehen.

Das Gewinde 12 des Gewindeschaftes 10 erstreckt sich von der Spitze 13 über einen ersten Teilbereich 14, wobei der an das Gewinde 12 anschließende zweite Teilbereich 15 des Gewindeschaftes 10 sich gewindelos kegel- oder trompetenförmig zu dem Kragen 8 des Kopfteils 7 hin erstreckt. In den **Fign. 1** bis **3****, 11a** bis **11c** und **14** ist der zweite Teilbereich 15 des Gewindeschaftes 10 trompetenförmig dargestellt.

Die Ankerschraube 4 wird vorzugsweise im retromolaren und palatinalen Bereich des Kiefers 3 über die Schleimhaut 16 in denselben eingeschraubt, und zwar soweit, dass das gesamte Gewinde 12 komplett im Kieferknochen verschwindet. Die Schleimhaut 16 liegt nach dem Eindrehen im zweiten gewindelosen kegel- oder trompetenförmigen Teilbereich 15 an dem Gewindeschaft 10 an, wodurch Reizungen der Schleimhaut 16 durch Bewegungen weitestgehend vermieden werden.

Zum leichteren Eindrehen der Ankerschraube 4 in den Kiefer 3 kann die Spitze 13 der Ankerschraube 4 als Bohrspitze 17 mit einer Bohrkerbe 17a ausgebildet sein (siehe **Fig. 14**).

Damit es zu keinerlei Verletzungen der Schleimhaut 16 oder auch der Zunge kommt, ist der Übergang zwischen dem kegel- oder trompetenförmigen zweiten Teilbereich 15 des Gewindeschaftes 10 zu dem Kragen 8 hin abgerundet.

Damit sich die Ankerschraube 4 nach einem in der Regel längeren Verbleib im Kiefer 3 leicht wieder herausdrehen lässt, kann das Gewinde 12 vorzugsweise rückschneidend ausgebildet sein (siehe **Fig. 14**). Dadurch werden u.a. größere Verletzungen an der Schleimhaut 16 beim Herausdrehen vermieden.

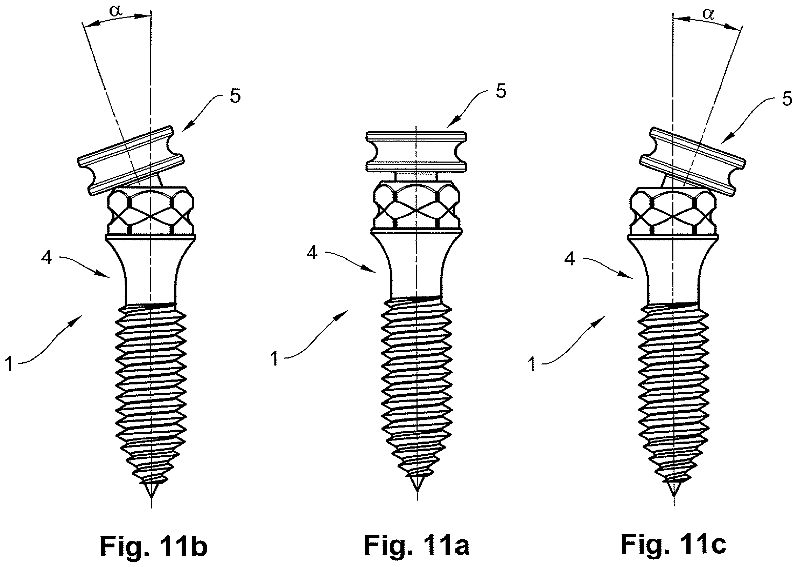

Das Kopplungselement 5 ist in eine stirnseitige Ausnehmung 18 im Kopfteil 7 der Ankerschraube 4 einsetzbar, wobei das Kopplungselement 5 in der Ausnehmung 18 in alle Richtungen schwenkbar, frei drehbar und festklemmbar sowie in axialer Richtung gehalten ist. Dazu weist die Ausnehmung 18 im Grund 18a derselben einen kugelförmigen Teil 19 auf, der oberhalb der Mitte 20 der Kugel in einen sich von der Stirnseite 21 des Kopfteils 7 erstreckenden kegelförmigen Teil 22 der Ausnehmung 18 ausläuft. Das im Wesentlichen zylindrische Kopplungselement 5 weist an seinem freien Ende ebenfalls einen entsprechenden kugelförmigen Teil 23 auf. Die kugelförmige Verbindung zwischen Ankerschraube 4 und Kopplungselement 5 sorgt für die Schwenkbarkeit um einen bestimmten Winkel α (**Fig. 11a** bis **11c** zeigen verschiedene Stellungen des Kopplungselementes 5 zur Ankerschraube 4) und freie Drehbarkeit des Kopplungselements 5, wobei zur Einstellung und Fixierung einer Vorspannung auf den jeweiligen Draht 2 das Kopplungselement 5 eine Klemmvorrichtung aufweist, die nachfolgend noch genauer beschrieben wird. Wie bereits beschrieben, sorgt die Ausbildung der Ausnehmung 18 dafür, dass der kugelförmige Teil 23 des Kopplungselementes 5 in dem kugelförmigen Teil 19 der Ausnehmung 18 relativ leicht einclipsbar und sicher in axialer Richtung gehalten ist.

Der kugelförmige Teil 23 des Kopplungselementes 5 weist mindestens einen denselben radial durchdringenden Schlitz 24 auf, der bzw. die den kugelförmigen Teil 23 des Kopplungselementes 5 in Segmente 25 teilt. Bei dem dargestellten Ausführungsbeispiel sind zwei sich kreuzende Schlitze 24 vorgesehen, wodurch vier Segmente 25 gebildet werden. Zur Bildung der Klemmvorrichtung weist das Kopplungselement 5 eine sich im Wesentlichen über die gesamte Länge desselben erstreckte koaxiale Gewindebohrung 26 auf, die an ihrem zu dem kugelförmigen Teil 23 des Kopplungselementes 5 gerichteten Ende in einen kegelförmigen Teil 27 ausläuft. In die Gewindebohrung 26 ist ein Gewindestift 28 (siehe **Fig. 1** und **8** bis **10**) einschraubbar, der mit seinem kegelförmig ausgebildeten Ende 29 beim Verdrehen des Gewindestiftes 28 in die eine Richtung in dem kegelförmigen Teil 27 der Gewindebohrung 26 zur Anlage kommt und die Segmente 25 des kugelförmigen Teils 23 des Kopplungselementes 5 in dem kugelförmigen Teil 19 der stirnseitigen Ausnehmung 18 im Kopfteil 7 einspannt. Vorzugsweise ist das Gewinde 30 der Gewindebohrung 26 gegenläufig zu dem Gewinde 12 der Ankerschraube 4 ausgebildet.

Zum leichten Entfernen des Kopplungselementes 5 aus der Ausnehmung 18 der Ankerschraube 4 ist das zu dem kugelförmigen Teil 23 des Kopplungselementes 5 bzw. zu dem kugelförmigen Teil 19 der Ausnehmung 18 gerichtete Ende des Gewindestiftes 28 ebenfalls kugelförmig ausgebildet, das sich beim Verdrehen des Gewindestiftes 28 in die andere Richtung am Grund 18a des kugelförmigen Teils 19 der stirnseitigen Ausnehmung 18 im Kopfteil 7 abstützt. Dabei wird das Kopplungselement 5 mit seinem kugelförmigen Teil 23 kraftneutral aus der Ausnehmung 18 ohne Belastung auf die Ankerschraube 4 sehr leicht herausbewegt.

Für das Ein- und Ausdrehen des Gewindestiftes 28 ist in dem freien von dem kugelförmigen Teil 23 des Kopplungselementes 5 bzw. von dem kugelförmigen Teil 19 der Ausnehmung 18 abgewandten Ende des Gewindestiftes 28 ein Innenmehrkant 31 vorgesehen, wobei der Gewindestift 28 mittels eines dem Innenmehrkant 31 entsprechenden Werkzeug betätigt werden kann.

Wie bereits erwähnt kann der jeweilige Draht 2 bzw. die jeweilige kieferorthopädische Apparatur mit seinem einen Ende 6 entweder einstückig an das Kopplungselement 5 angeformt (siehe **Fig. 12** und **13**) oder mittels eines Fügeverfahrens mit dem Kopplungselement 5 verbunden sein (Draht 2 in **Fig. 1** strichpunktiert dargestellt). Bei letzterem ist an das von dem kugelförmigen Teil 23 des Kopplungselementes 5 abgewandten Ende ein koaxialer Bund 32 an das Kopplungselement 5 einstückig angeformt, in den eine umlaufende Nut 33 zur Aufnahme des Drahtes 2 eingeformt ist.

Die Verankerungsvorrichtung 1 ist für jegliche kieferorthopädischen Korrekturbehandlungen verwendbar. Besonders eignet sich die Verankerungsvorrichtung 1 für die Gaumenerweiterung, die sehr häufig bei Kindern im Alter von sieben bis neun Jahren vorgenommen werden muss, um ggf. genügend Platz im Kiefer 3 für die auf die Milchzähne folgenden bleibenden Zähne zu schaffen.

Für eine Verwendung der Verankerungsvorrichtung 1, bei der kein Schwenken des Kopplungselementes 5 in seiner Neigung zur Längsmittelachse der Ankerschraube 4 jedoch das einfache Einsetzen und die einfache Entfernung desselben von der Ankerschraube 4 gewünscht ist, wobei beim Entfernen des Kopplungselementes 5 keinerlei Belastung auf die Ankerschraube 4 auftritt, kann ein Kopplungselement (nicht dargestellt) verwendet werden, das oberhalb des kugelförmigen Teils 23 desselben einen kegelförmigen Bund aufweist, der sich nach dem Einsetzen des Kopplungselementes in die stirnseitige Ausnehmung 18 der Ankerschraube 4 an dem kegelförmigen Teil 22 der Ausnehmung 18 abstützt. Die Möglichkeit der Anpassung des Drahtes bzw. der kieferorthopädischen Apparatur in seiner radialen Stellung zur Ankerschraube 4 bleibt dabei erhalten.

Ferner kann es durchaus möglich sein, dass bei der Verankerungsvorrichtung anstelle der Ankerschraube 4 ein nur dem Kopfteil 7 der Ankerschraube 4 entsprechendes Grundelement (ebenfalls nicht dargestellt) mit der stirnseitigen Ausnehmung 18 zum Einsatz kommt, in die bzw. aus der das Kopplungselement 5 einsetzbar bzw. entfernbar ist. Dieses Grundelement wird dabei vorzugsweise unter Zuhilfenahme von Klebstoff oder Kunststoff fixiert.

## Patentansprüche

1. Verankerungsvorrichtung (1) zum Befestigen von orthodontischen Drähten (2) oder kieferorthopädischen Apparaturen für kieferorthopädische Korrekturbehandlungen, bestehend aus einer in den jeweiligen Kiefer (3) einschraubbaren Ankerschraube (4), an der der jeweilige Draht (2) bzw. die jeweilige kieferorthopädische Apparatur vorzugsweise im Bereich des Kopfteils (7) der Ankerschraube (4) angreifen kann und lösbar befestigt werden kann, wobei die Verankerungsvorrichtung (1) ein Kopplungselement (5) aufweist, das an einem Ende (6) des jeweiligen Drahtes (2) bzw. der jeweiligen kieferorthopädischen Apparatur vorgesehen ist,
**dadurch gekennzeichnet,**
**dass** das Kopplungselement (5) in eine stirnseitige Ausnehmung (18) im Kopfteil (7) der Ankerschraube (4) einsetzbar ist, in der das Kopplungselement (5) in alle Richtungen schwenkbar, frei drehbar und festklemmbar ist, wobei die stirnseitige Ausnehmung (18) im Kopfteil (7) der Ankerschraube (4) im Grund (18a) derselben einen kugelförmigen Teil (19) aufweist, der oberhalb der Mitte (20) der Kugel in einen sich von der Stirnseite (21) des Kopfteils (7) erstreckenden kegelförmigen Teil (22) der Ausnehmung (18) ausläuft, und wobei das im Wesentlichen zylindrische Kopplungselement (5) an seinem freien Ende ebenfalls einen entsprechenden kugelförmigen Teil (23) aufweist, dass der kugelförmige Teil (23) des Kopplungselementes (5) mindestens einen denselben radial durchdringenden Schlitz (24) aufweist, der bzw. die den kugelförmigen Teil (23) des Kopplungselementes (5) in Segmente (25) teilt, und dass das Kopplungselement (5) eine sich im Wesentlichen über die gesamte Länge desselben erstreckte koaxiale Gewindebohrung (26) aufweist, die an ihrem zu dem kugelförmigen Teil (23) des Kopplungselementes (5) gerichteten Ende in einen kegelförmigen Teil (27) ausläuft, wobei in die Gewindebohrung (26) ein Gewindestift (28) einschraubbar ist, der mit seinem kegelförmig ausgebildeten Ende (29) beim Verdrehen des Gewindestiftes (28) in die eine Richtung in dem kegelförmigen Teil (27) der Gewindebohrung (26) zur Anlage kommt und die Segmente (25) des kugelförmigen Teils (23) des Kopplungselementes (5) in dem kugelförmigen Teil (19) der stirnseitigen Ausnehmung (18) im Kopfteil (7) einspannt.

2. Verankerungsvorrichtung nach Anspruch 1,
**dadurch gekennzeichnet,**
**dass** das zu dem kugelförmigen Teil (23) des Kopplungselementes (5) bzw. zu dem kugelförmigen Teil (19) der Ausnehmung (18) gerichtete Ende des Gewindestiftes (28) ebenfalls kugelförmig ausgebildet ist, das sich beim Verdrehen des Gewindestiftes (28) in die andere Richtung am Grund (18a) des kugelförmigen Teils (19) der stirnseitigen Ausnehmung (18) im Kopfteil (7) abstützt, wobei das Kopplungselement (5) mit seinem kugelförmigen Teil (23) aus der Ausnehmung (18) herausbewegt wird.

3. Verankerungsvorrichtung nach Anspruch 1 oder 2,
**dadurch gekennzeichnet,**
**dass** in dem freien, von dem kugelförmigen Teil (23) des Kopplungselementes (5) bzw. von dem kugelförmigen Teil (19) der Ausnehmung (18) abgewandten Ende des Gewindestiftes (28) ein Innenmehrkant (31) vorgesehen ist.

4. Verankerungsvorrichtung nach einem der Ansprüche 1 bis 3,
**dadurch gekennzeichnet,**
**dass** das Kopplungselement (5) einstückig an den jeweiligen Draht (2) bzw. die jeweilige kieferorthopädische Apparatur angeformt ist.

5. Verankerungsvorrichtung nach einem der Ansprüche 1 bis 3,
**dadurch gekennzeichnet,**
**dass** das Kopplungselement (5) mittels eines Fügeverfahrens mit dem jeweiligen Draht (2) bzw. der jeweiligen kieferorthopädischen Apparatur verbunden ist.

6. Verankerungsvorrichtung nach einem der Ansprüche 1 bis 5,
**dadurch gekennzeichnet,**
**dass** an das von dem kugelförmigen Teil (23) des Kopplungselementes (5) abgewandten Ende ein koaxialer Bund (32) an das Kopplungselement (5) einstückig angeformt ist.

7. Verankerungsvorrichtung nach Anspruch 6,
**dadurch gekennzeichnet,**
**dass** in dem Bund (32) eine umlaufende Nut (33) eingeformt ist.

8. Verankerungsvorrichtung nach einem der Ansprüche 1 bis 7,
**dadurch gekennzeichnet,**
**dass** das Gewinde (12) des Gewindeschaftes (10) der Ankerschraube (4) sich von der Spitze (13) über einen ersten Teilbereich (14) desselben erstreckt, dass der an das Gewinde (12) anschließende zweite Teilbereich (15) des Gewindeschaftes (10) sich gewindelos kegel-oder trompetenförmig zu einem Kragen (8) des Kopfteils (7) hin erstreckt, und dass das Gewinde (12) rückschneidend ausgebildet ist.

9. Verankerungsvorrichtung nach Anspruch 8,
**dadurch gekennzeichnet,**
**dass** der Übergang zwischen dem kegel- oder trompetenförmigen zweiten Teilbereich (15) des Gewindeschaftes (10) zu dem Kragen (8) hin abgerundet ist.

10. Verankerungsvorrichtung nach Anspruch 8 oder 9,
**dadurch gekennzeichnet,**
**dass** die Spitze (13) der Ankerschraube (4) als Bohrspitze (17) mit einer Bohrkerbe (17a) ausgebildet ist.

11. Verankerungsvorrichtung nach einem der Ansprüche 1 bis 10,
**dadurch gekennzeichnet,**
**dass** das Kopfteil (7) der Ankerschraube (4) an seinem äußeren Umfang (11) einen Mehrkant aufweist.

## Claims

1. An anchoring device (1) for fastening orthodontic wires (2) or orthodontic appliances for orthodontic corrective treatment, being composed of an anchor screw (4) that can be screwed into the given jaw (3), the respective wire (2) or the respective orthodontic appliance being able to be applied to and removably be fastened to said anchor screw, preferably in the area of the head portion (7) of the anchor screw (4), the anchoring device (1) having a coupling element (5) that is provided at an end (6) of the respective wire (2) or of the respective orthodontic appliance,
**characterised in that**
the coupling element (5) can be introduced into a frontal recess (18) in the head portion (7) of the anchor screw (4), the coupling element (5) being pivotable in all directions, freely rotatable and lockable therein, the frontal recess (18) in the head portion (7) of the anchor screw (4) having a ball-shaped part (19) in the bottom (18a) of said anchor screw, said ball-shaped part tapering off, above the centre (20) of the ball, into a cone-shaped part (22) of the recess (18) that extends from the front (21) of the head portion (7), and the coupling element (5), which is essentially cylindrical, also having a corresponding ball-shaped part (23) at its free end, **in that** the ball-shaped part (23) of the coupling element (5) has at least one slot (24) that passes through said ball-shaped part radially and that divides the ball-shaped part (23) of the coupling element (5) into segments (25), and **in that** the coupling element (5) has a coaxial threaded hole (26) essentially extending over the entire length of the same and tapering off into a cone-shaped part (27) at its end oriented towards the ball-shaped part (23) of the coupling element (5), a threaded pin (28) being able to be screwed into the threaded hole (26), said threaded pin, with its end (29) that is realised so as to be cone-shaped, coming to rest in the ball-shaped part (27) of the threaded hole (26) when the threaded pin (28) is being twisted in one direction and gripping the segments (25) of the ball-shaped part (23) of the coupling element (5) in the ball-shaped part (19) of the frontal recess (18) in the head portion (7).

2. The anchoring device according to claim 1,
**characterised in that**
the end of the threaded pin (28) oriented towards the ball-shaped part (23) of the coupling element (5) or the ball-shaped part (19) of the recess (18) is also realised so as to be ball-shaped, said end resting on the bottom (18a) of the ball-shaped part (19) of the frontal recess (18) in the head portion (7) when the threaded pin (28) is being twisted in the other direction, the coupling element (5), with its ball-shaped part (23), being moved out of the recess (18).

3. The anchoring device according to claim 1 or 2,
**characterised in that**
in the free end of the threaded pin (28) facing away from the ball-shaped part (23) of the coupling element (5) or from the ball-shaped part (19) of the recess (18), a polygonal inner periphery (31) is provided.

4. The anchoring device according to any one of claims 1 to 3,
**characterised in that**
the coupling element (5) is moulded to the respective wire (2) or to the respective orthodontic appliance in one piece.

5. The anchoring device according to any one of claims 1 to 3,
**characterised in that**
the coupling element (5) is connected to the respective wire (2) or to the respective orthodontic appliance by means of a joining method.

6. The anchoring device according to any one of claims 1 to 5,
**characterised in that**
at the end facing away from the ball-shaped part (23) of the coupling element (5), a coaxial collar (32) is moulded to the coupling element (5) in one piece.

7. The anchoring device according to claim 6,
**characterised in that**
a circumferential groove (33) is moulded into the collar (32).

8. The anchoring device according to any one of claims 1 to 7,
**characterised in that**
the screw thread (12) of the threaded shaft (10) of the anchor screw (4) extends from the tip (13) over a first portion (14) of said threaded shaft, **in that** the second portion (15) of the threaded shaft (10) following the screw thread (12) extends without a screw thread in the shape of a cone or trumpet towards a flange (8) of the head portion (7), and **in that** the screw thread (12) is realised so as to be reversing.

9. The anchoring device according to claim 8,
**characterised in that**
the transition between the cone-shaped or trumpet-shaped second portion (15) of the threaded shaft (10) is rounded towards the flange (8).

10. The anchoring device according to claim 8 or 9,
**characterised in that**
the tip (13) of the anchor screw (4) is realised as a drill bit (17) having a drill notch (17a).

11. The anchoring device according to any one of claims 1 to 10,
**characterised in that**
the head portion (7) of the anchor screw (4), at its outer circumference (11), has a polygonal periphery.

## Revendications

1. Dispositif d'ancrage (1) pour attacher des fils (2) orthodontiques ou des appareillages orthodontiques pour des traitements de correction orthodontiques, étant composé d'une vis d'ancrage (4) qui est vissable dans le maxillaire (3) respectif, le fil (2) respectif ou l'appareillage orthodontique respectif pouvant engager et être attaché de manière amovible à ladite vis d'ancrage, de préférence dans la région de la partie de la tête (7) de la vis d'ancrage (4), le dispositif d'ancrage (1) présentant un élément de couplage (5) qui est prévu sur une extrémité (6) du fil (2) respectif ou de l'appareillage orthodontique respectif,
**caractérisé en ce que**
l'élément de couplage (5) peut être placé dans une échancrure (18) sur le front de la partie de la tête (7) de la vis d'ancrage (4), l'élément de couplage (5) pouvant pivoter dans toutes les directions, tourner librement et être coincé dans ladite échancrure, l'échancrure (18) sur le front de la partie de la tête (7) de la vis d'ancrage (4) présentant une partie (19) sphérique dans le fond (18a) de ladite vis, ladite partie sphérique s'écoulant, au-dessus du centre (20) de la sphère, dans une partie (22) conique de l'échancrure (18) s'étendant du front (21) de la partie de la tête (7), et l'élément de couplage (5), qui est cylindrique pour l'essentiel, également présentant une partie (23) sphérique correspondante sur son extrémité libre, **en ce que** la partie (23) sphérique de l'élément de couplage (5) présente au moins une fente (24) qui traverse le même radialement et qui divise la partie (23) sphérique de l'élément de couplage (5) en des segments (25), et **en ce que** l'élément de couplage (5) présente un trou taraudé (26) coaxial qui s'étend sur toute la longueur du même et qui s'écoule dans une partie (27) conique sur son extrémité orientée vers la partie (23) sphérique de l'élément de couplage (5), une cheville filetée (28) pouvant être vissée dans le trou taraudé (26), ladite cheville filetée, avec son extrémité (29) réalisée à être conique, prenant appui dans la partie (27) conique du trou taraudé (26) lorsque la cheville filetée (28) est tordue dans une direction et enserrant les segments (25) de la partie (23) sphérique de l'élément de couplage (5) dans la partie (19) sphérique de l'échancrure (18) sur le front de la partie de la tête (7).

2. Dispositif d'ancrage selon la revendication 1,
**caractérisé en ce que**
l'extrémité de la cheville filetée (28) orientée vers la partie (23) sphérique de l'élément de couplage (5) ou vers la partie (19) sphérique de l'échancrure (18) est également réalisée à être sphérique, ladite extrémité s'appuyant sur le fond (18a) de la partie (19) sphérique de l'échancrure (18) sur le front de la partie de la tête (7) lorsque la cheville filetée (28) est tordue dans l'autre direction, l'élément de couplage (5), avec sa partie (23) sphérique, étant mû dehors l'échancrure (18).

3. Dispositif d'ancrage selon la revendication 1 ou 2,
**caractérisé en ce que**
dans l'extrémité libre de la cheville filetée (28) faisant face à l'opposé de la partie (23) sphérique de l'élément de couplage (5) ou de la partie (19) sphérique de l'échancrure (18), une périphérie polygonale intérieure (31) est prévue.

4. Dispositif d'ancrage selon l'une quelconque des revendications 1 à 3,
**caractérisé en ce que**
l'élément de couplage (5) est moulé au fil (2) respectif ou à l'appareillage orthodontique respectif d'une seule pièce.

5. Dispositif d'ancrage selon l'une quelconque des revendications 1 à 3,
**caractérisé en ce que**
l'élément de couplage (5) est relié avec le fil (2) respectif ou avec l'appareillage orthodontique respectif au moyen d'un procédé de jonction.

6. Dispositif d'ancrage selon l'une quelconque des revendications 1 à 5,
**caractérisé en ce que**
sur l'extrémité faisant face à l'opposé de la partie (23) sphérique de l'élément de couplage (5), un épaulement (32) coaxial est moulé à l'élément de couplage (5) d'une seule pièce.

7. Dispositif d'ancrage selon la revendication 6,
**caractérisé en ce qu'**
une rainure périphérique (33) est moulée dans l'épaulement (32).

8. Dispositif d'ancrage selon l'une quelconque des revendications 1 à 7,
**caractérisé en ce que**
le filetage (12) de la tige filetée (10) de la vis d'ancrage (4) s'étend à partir de la crête (13) à travers une première partie (14) de ladite tige filetée, **en ce que** la deuxième partie (15) de la tige filetée (10) suivant le filetage (12) s'étend, sans filetage, en forme conique ou de trompette vers une manchette (8) de la partie de la tête (7), et **en ce que** le filetage (12) est réalisé de manière recoupante.

9. Dispositif d'ancrage selon la revendication 8,
**caractérisé en ce que**
la transition entre la deuxième partie (15) en forme conique ou de trompette, de la tige filetée (10), est arrondie vers la manchette (8).

10. Dispositif d'ancrage selon la revendication 8 ou 9,
**caractérisé en ce que**
la crête (13) de la vis d'ancrage (4) est réalisée comme une pointe de vis (17) ayant une enclenche de perçage (17a).

11. Dispositif d'ancrage selon l'une quelconque des revendications 1 à 10,
**caractérisé en ce que**
la partie de la tête (7) de la vis d'ancrage (4) présente une périphérie polygonale sur sa circonférence (11) extérieure.
